# EUROPEAN PATENT APPLICATION

(11) **EP 0 761 412 A1**
(43) Date of publication of application: **12.03.1997**
(21) Application number: 96305241.0
(22) Date of filing: 17.07.1996
(51) Int. Cl.: B29C 49/00, B29C 51/26, B29L 22/00, B29K 101/12, B29K 27/06

(54) **Method and apparatus for producing synthetic resin hollow articles**

(30) Priority: 29.08.1995 JP 220555/95
(71) Applicant: TSUTSUNAKA PLASTIC INDUSTRY CO., LTD., Osaka (JP)
(72) Inventor: Seki, Yuki, Osakashi, Osaka (JP); Naito, Kazunori, Kitakatsuragigun, Nara (JP)
(74) Representative: Thomson, Paul Anthony

(57) **Abstract**

A pair of thermoelastic synthetic resin sheets **1**, **2** are clamped around their periphery between a frame-shaped spacer **3** and upper and lower clampers **4**, **4**, respectively, so as to form a closed space **5** between the sheets **1**, **2**. The spacer **3** has sealing pads **S1** each attached to upper and lower surfaces of the spacer, respectively. The sheets **1**, **2** are heated so as to soften the sheets, and then clamped, inside of the spacer **3** and clampers **4**, **4**, by upper and lower forming dies **8**, **9**. Then, a compressed air introducing nozzle **10** provided in the upper forming die **8** is moved downward so that the leading end of the nozzle **10** penetrates the upper sheet **1** and is positioned between the upper and lower sheets **1**, **2**. Then, compressed air is introduced into the closed space **5** through the nozzle **10** so as to press both of the sheets **1**, **2** against the corresponding inner cavity surfaces of the forming dies **8**, **9**.

## Description

### FIELD OF THE INVENTION

The present invention relates to a method for producing synthetic resin hollow articles and a device for producing the same.

### BACKGROUND OF THE INVENTION

Conventionally, in order to produce synthetic resin hollow articles, so called 'two-sheets-forming methods' have been known. In brief, these methods include the steps of clamping two heated synthetic resin sheets disposed at a predetermined distance from one another by a pair of forming dies and introducing air therebetween.

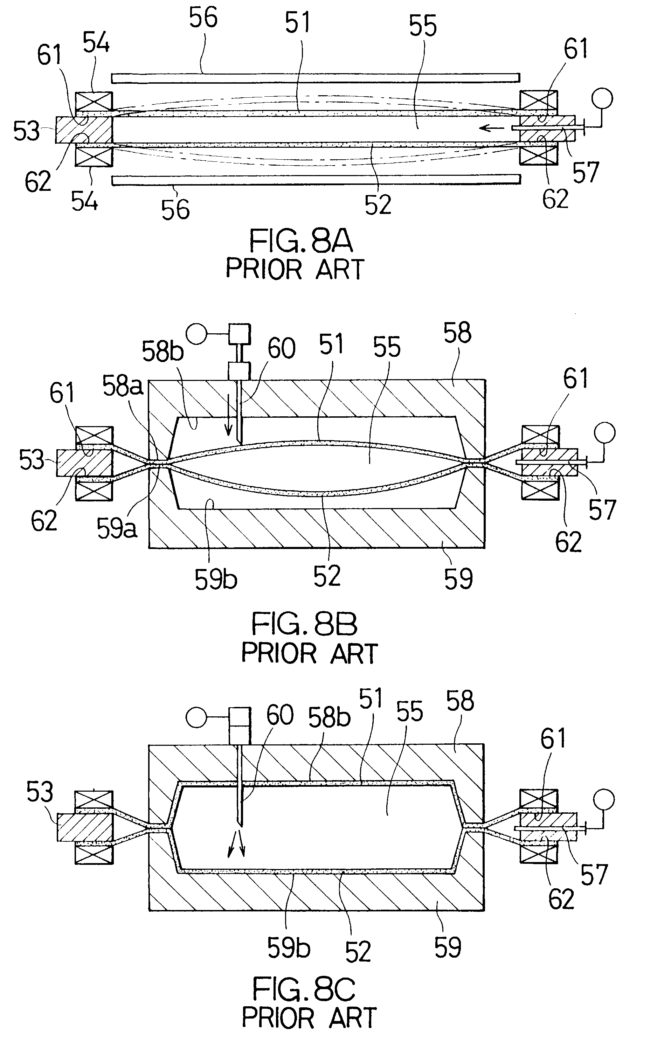

One of the known methods (hereinafter referred to as the 'first conventional method') for producing synthetic resin hollow articles is now described with reference to Figs. 8A-8C. In this first conventional method, two thermoelastic synthetic resin sheets **51, 52** are used as forming materials. As shown in Fig. 8A, each sheet **51, 52** is clamped at the peripheral portion thereof between a spacer **53** and one of the upper and lower clampers **54, 54,** respectively, such that both of the sheets **51, 52** are disposed horizontally and parallel to each other while separated a certain distance so as to form a closed space **55** therebetween. Then, the sheets **51, 52** are heated by upper and lower heaters **56, 56** so as to soften the sheets **51, 52**. Preferably, compressed air is introduced into the closed space **55** through an air nozzle **57** provided in the spacer **53** so as to expand the sheets **51, 52** in a direction away from each other.

As shown in Fig. 8B, while the sheets **51, 52** are heated and softened, both of the sheets **51, 52** are pressed, inside of the portion clamped by the upper and lower forming dies **58, 59,** so that a peripheral portion of each sheet **51, 52** is pressed by peripheral edges of the forming dies **58, 59** so as to integrally join the sheets **51, 52**. Then, an air nozzle **60** provided in the upper forming die **58** is moved downward so that the leading end of the nozzle **60** penetrates the upper sheet **51** and is positioned in the space **55** between the upper and lower sheets **51, 52**. Then, as shown in Fig. 8C, compressed air having a certain pressure is introduced into the closed space **55** through the nozzle **60** so as to press both of the sheets **51, 52** against corresponding inner cavity surfaces of the forming dies **58, 59**. Then, the sheets **51, 52** are cooled while the inner pressure between the sheets **51, 52** is maintained, and the compressed air introducing nozzle **60** is returned to its original position. Thereafter, the forming dies **58, 59** are detached so as to take out a formed hollow article.

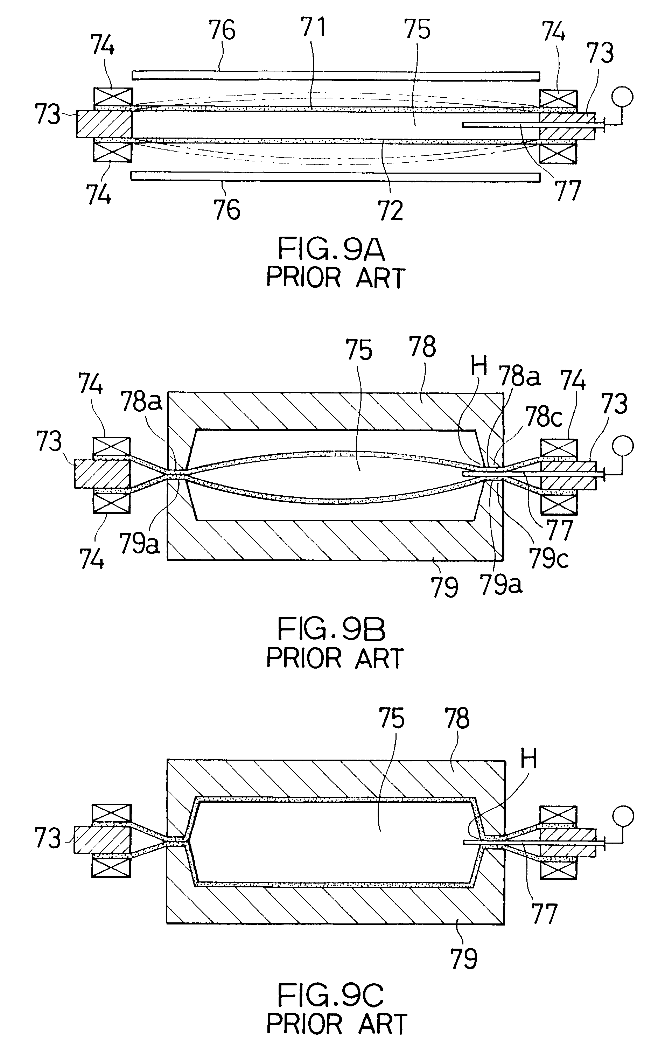

Another known method (hereinafter referred to as the 'second conventional method') for producing synthetic resin hollow articles is now described with reference to Figs. 9A-9C. In this second conventional method, two thermoelastic synthetic resin sheets **71, 72** are used as forming materials. As shown in Fig. 9A, each sheet is clamped at the peripheral portion thereof between a spacer **73** and one of the upper and lower clampers **74, 74,** respectively, such that both of the sheets **71, 72** are disposed horizontally parallel with each other while separated a certain distance so as to form a closed space **75** therebetween. Then, the sheets **71, 72** are heated by the upper and lower heaters **76, 76** so as to soften the sheets **71, 72**. Preferably, compressed air is introduced into the closed space **75** through an air nozzle **77** provided in the spacer **73** so as to expand the sheets **71, 72** in a direction away from each other.

As shown in Fig. 9B, while the sheets are heated and softened, both of the sheets **71, 72** are pressed, inside of the portion clamped by the spacer **73** and clampers **74, 74,** by upper and lower forming dies **78, 79** so that the peripheral portion of each sheet **71, 72** is also pressed by the peripheral edges of the forming dies **78, 79** to integrally join the sheets **71, 72,** with the air nozzle **77** positioned in the air introducing aperture **H** formed by nozzle fitting grooves **78c, 79c** in the upper and lower dies **78, 79,** respectively. Each groove **78c, 79c** is formed on a sheet pressing periphery of the respective forming die **78, 79**.

Then, as shown in Fig. 9C, compressed air having a certain pressure is introduced into the closed space **75** through the nozzle **77** to press both of the sheets **71, 72** against corresponding inner cavity surfaces of the forming dies **78, 79**. Then, the sheets **71, 72** are cooled with the inner pressure between the sheets **71, 72** kept constant, and the forming dies **78, 79** are detached so as to take out a formed hollow article.

However, the above mentioned first conventional method has the problem that the air introducing nozzle **60** sometimes fails to penetrate the sheet **51**. This results in the failure of introducing compressed air into the closed space **55**. Specifically, the closed space **55** does not necessary have enough inner pressure to give sufficient restitution force to the sheet **51** to enable the nozzle **60** to penetrate the sheet **51**. Thus, the nozzle **60** may merely press the sheet **51** towards the other sheet **52** without penetrating the sheet **51**. Pushing the sheet **51** towards the other sheet **52** may cause the sheets **51, 52** to contact each other and, thus, possibly cause adherence of the sheets **51, 52**. As a result, it is difficult to insert the compressed air introducing nozzle **60** into the closed space **55**. The thinner the shell wall of a hollow article is, the more serious the above mentioned problem becomes.

In order to solve the above problem, high-pressure air may be introduced between the sheets **51, 52** before clamping them between the upper and lower forming dies **58, 59** so that the closed space **55** is pre-pressurized. However, the introduced high-pressure air may leak from a clearance formed between the spacer **53** and the sheets **51, 52** to the outside of the closed space **55**. Further, when both of the sheets **51, 52** are pressed by the inner surfaces of the forming dies **58, 59** during the clamping process of the sheets **51, 52,** the high-pressure air between the two sheets **51, 52** is even further pressurized. This high-pressure may cause breakage of the sheets **51, 52** adjacent to the clamper **54, 54,** or may cause wrinkling of the sheets **51, 52** because of excessive resin. Thus, the above first conventional method is not suitable for pricking the sheet **51** with the compressed air introducing nozzle **60**.

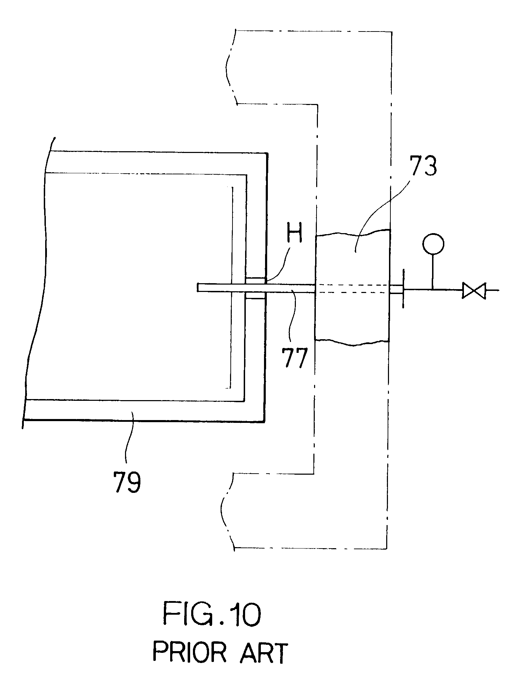

On the other hand, in the second conventional method, there is no need to keep a high pressure in the closed space **75** before clamping the sheets **71, 72** by the forming dies **78, 79** because compressed air can be introduced between the sheets **71, 72** through the air nozzle **77** without pricking one of the sheets with a nozzle as in the first conventional method. As shown in Fig. 10, the position of the air nozzle introducing aperture **H** for fitting the air nozzle **77**, i.e., at the juncture of the nozzle fitting grooves **78c, 79c,** should always be located at the nearest position to the fixing portion of the air nozzle **77** in the spacer **73**. Therefore, it is difficult to adjust the mating position of the upper and lower forming dies **78, 79** depending on the shape of the hollow article to be made. The mating position of the air nozzle **77** and the air nozzle introducing aperture **H** is somewhat troublesome to achieve and requires high-accuracy of the forming dies **78, 79** and a mating machine (not shown), thereby increasing manufacturing costs of the hollow articles.

### SUMMARY OF THE INVENTION

This invention was conceived in order to provide an improved method and apparatus for providing hollow articles and also to overcome the existing problems in the prior art. It is, thus, a first object of the invention to provide an improved method and apparatus for producing synthetic resin hollow articles. It is a further object of the invention to provide an improved method and apparatus for producing synthetic resin hollow articles wherein a compressed air introducing nozzle can easily and properly penetrate one of the sheets and be positioned between upper and lower sheets -- even if the distance between the walls of the hollow article is short, and if the thickness of the walls of the hollow article is thin.

According to a first aspect of the invention, a method of producing synthetic resin hollow articles comprises the steps of providing two thermoelastic synthetic resin sheets, disposing the sheets on upper and lower surfaces of a frame-shaped spacer,
clamping a peripheral portion of each of the sheets by and between the spacer and upper or lower clampers, respectively, in a manner to form an airtight closed space between the sheets, heating the sheets so as to soften the sheets, pressing the sheets inside of the spacer by upper and lower forming dies, penetrating a compressed air introducing nozzle movably provided in one of the forming dies through one of the sheets, introducing compressed air into the airtight closed space through the nozzle so as to press both of the sheets against corresponding inner cavity surfaces of the forming dies, and cooling the sheets while maintaining an inner pressure in the closed space.

According to a second aspect of the invention, an apparatus for producing synthetic resin hollow articles comprises a frame-shaped spacer, a pair of upper and lower clampers for clamping upper and lower thermoelastic synthetic resin sheets to be formed between the spacer and each of the clampers, respectively, at least one heater for heating the sheets so as to soften the sheets, and a pair of forming dies each having a peripheral edge for pressing peripheral portions of the sheets inside of the clamped portion, and a compressed air introducing nozzle movably provided in one of the dies to penetrate one of the sheets so as to introduce compressed air therebetween, wherein the spacer is equipped with sealing pads on the whole periphery of sheet contacting surfaces of the spacer so as to be airtight.

Other aspects, objects and features will be apparent from the following detailed description of the invention with reference to the attached drawings.

### BRIEF DESCRIPTION OF THE DRAWINGS

Fig. 1 illustrates the steps of a method for producing synthetic resin hollow articles in accordance with a preferred embodiment of the invention, wherein Fig. 1A is a cross-sectional view showing the step of heating the sheet materials, Fig. 1B is a cross-sectional view showing the step of securing the periphery of the sheet materials by upper and lower forming dies and Fig. 1C is a cross-sectional view showing the step of introducing compressed air into the closed space through an air introducing nozzle.

Fig. 2 is a perspective view of an integrated-type spacer having a sealing pad.

Fig. 3 is a perspective view of a divisional-type spacer having sealing pads in a disassembled state in accordance with another embodiment of the invention.

Fig. 4 is an enlarged cross-sectional view along the line **4** - **4** in Fig. 3.

Fig. 5 is an enlarged cross-sectional view corresponding to that of Fig. 4 in accordance with another embodiment.

Fig. 6 is an enlarged cross-sectional view along the line **6** - **6** in Fig. 3.

Fig. 7 is a perspective view of a divisional-type spacer, a pair of sheet materials to be formed, and upper and lower clampers in a disassembled state in accordance with a preferred embodiment of the invention.

Fig. 8 illustrates steps of a method for producing synthetic resin hollow articles in accordance with a first conventional method, wherein Fig. 8A is a cross-sectional view showing the step of heating the sheet materials, Fig. 8B is a cross-sectional view showing the step of pressing the periphery of the sheet materials by upper and lower forming dies and Fig. 8C is a cross-sectional view showing the step of introducing compressed air into the closed space through an air introducing nozzle.

Fig. 9 illustrates steps of a method for producing synthetic resin hollow articles in accordance with a second conventional method, wherein Fig. 9A is a cross-sectional view showing the step of heating the sheet materials, Fig. 9B is a cross-sectional view showing the step of pressing the periphery of the sheet materials by upper and lower forming dies and Fig. 9C is a cross-sectional view showing the step of introducing compressed air into the closed space through an air introducing nozzle.

Fig. 10 is a cross-sectional view showing the air nozzle positioned in a nozzle fitting groove in the conventional method shown in Fig. 9.

### DETAILED DESCRIPTION OF THE PREFERRED EMBODIMENTS

A preferred embodiment of the present invention will now be described, in detail, with reference to the accompanying drawings.

Two thermoelastic synthetic resin sheets **1, 2** are used as forming materials to be formed into a hollow article.

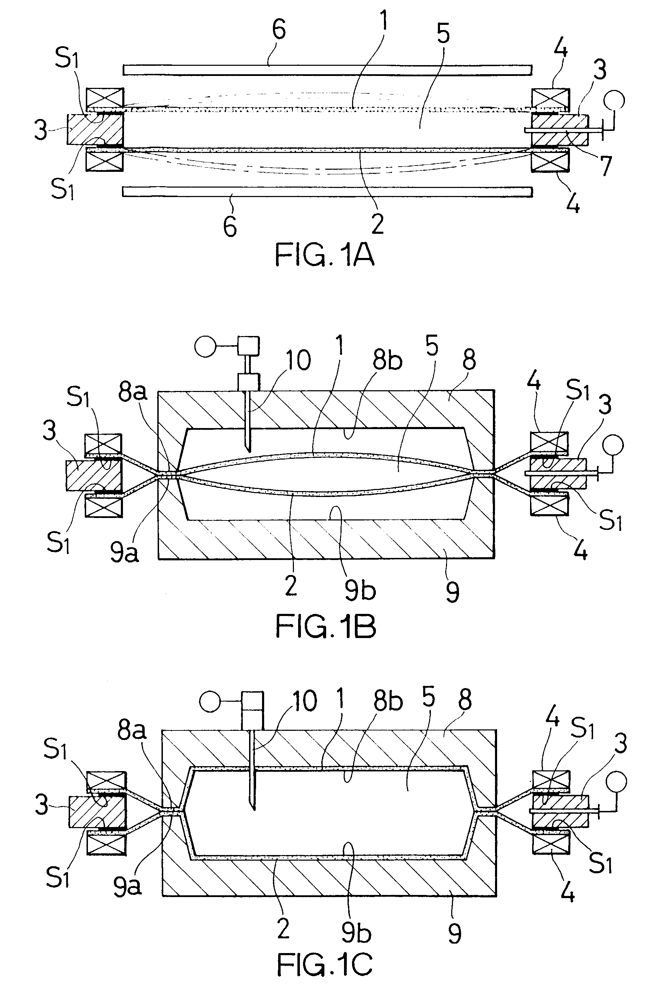

As shown in Fig. 1A, both of the sheets **1, 2** are at the peripheral portion thereof clamped by and between a frame-shaped spacer **3** and upper and lower clampers **4, 4,** respectively, such that both of the sheets **1, 2** are disposed horizontally and parallel with each other and separated a certain distance so as to form a closed space **5** therebetween. The spacer **3** has sealing pads **S1, S1** each attached to the upper and lower surfaces of the spacer **3**, respectively. The sheets **1, 2** are heated by upper and lower heaters **6, 6** so as to be softened. Preferably, compressed air is introduced into the closed space **5** through an air nozzle **7** provided in the spacer **3** so as to expand the sheets **1, 2** in a direction away from each other.

As shown in Fig. 1B, with the sheets **1, 2** heated and softened, both sheets **1, 2** are pressed, inside of the portion pressed by upper and lower clampers **4, 4,** so that peripheral portions of the sheets **1, 2** are pressed by peripheral edges of the forming dies **8, 9** to integrally join the sheets **1, 2**. Then, a compressed air introducing nozzle **10** provided in the upper forming die **8** is moved downward so that the leading end of the nozzle **10** penetrates the upper sheet **1** and is, thus, positioned between upper and lower sheets **1, 2**.

Then, as shown in Fig. 1C, compressed air having a certain pressure is introduced into the closed space **5** through the nozzle **10** so as to press both of the sheets **1, 2** against corresponding inner cavity surfaces of the forming dies **8, 9**.

With the inner pressure between the sheets **1, 2** maintained, he sheets **1, 2** are cooled, and then the compressed air introducing nozzle **10** is returned to its original position. Thereafter, the moldinq dies **8, 9** are detached so as to take out a formed hollow article.

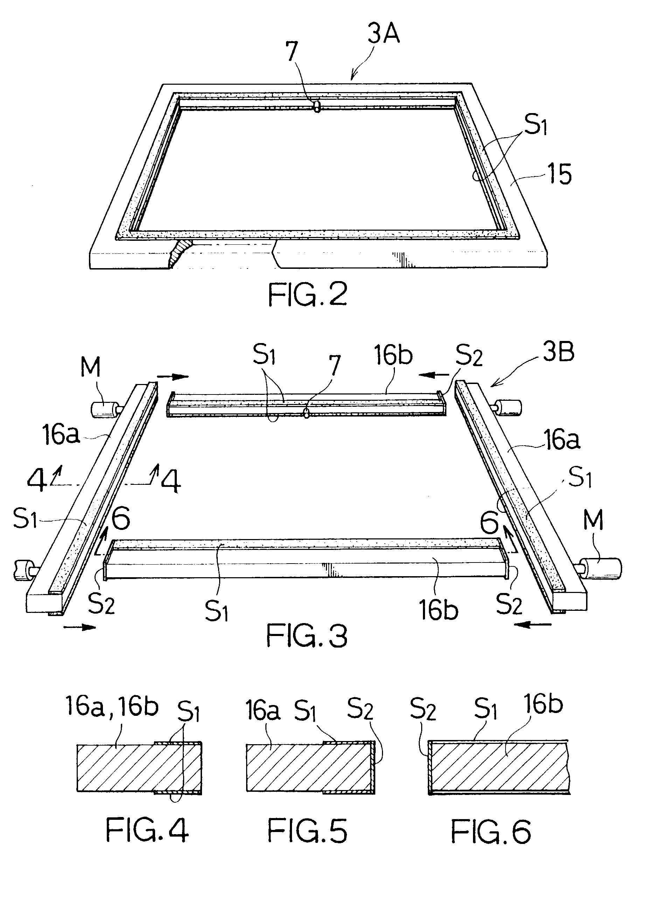

Preferably, the spacer **3** used in the invention includes a frame composed of a plurality of side pieces made of metal, such as aluminum, steel, or the like. The side pieces, preferably, have a rectangular cross-section. Fig. 2 shows a first preferred embodiment of a spacer **3A**. This spacer **3A** is an integral-type spacer having a rectangular frame **15**. Fig. 3 shows a second preferred embodiment of a spacer **3B**. This spacer **3B** is a divisional-type spacer including a pair of outer frame members **16a, 16a** and a pair of inner frame members **16b, 16b,** each of the members **16a, 16a, 16b, 16b** are mounted together by mechanical means **M** so as to form a rectangular frame when used to manufacture hollow articles. The numeral **7** shown in Figs. 2 and 3 denotes the air nozzle discussed above.

Both of the upper and lower surfaces of spacers **3A, 3B** are at their inner periphery, around the rectangular central opening, equipped with sealing pads **S1** so as to form an airtight closed space between the two sheets **1, 2**.

The sealing pads **S1** (and also sealing pads **S2** discussed below) are preferably made of heat-resistant rubber elastic materials such as, for example, chloroprene rubber, polyurethane rubber, silicone rubber, nitrile rubber, or the like. As a sealing pad **S1**, a strap-like material having an equal thickness is preferably used. The sealing pad **S1** preferably ranges in thickness from about 1 mm to about 10 mm. If the thickness is less than the above lower limit, it is difficult to attain perfect airtightness. On the other hand, if the thickness is more than the above upper limit, further improvement of the airtightness can not be obtained which is, thus, uneconomical; such excess thickness can also cause unnecessary deformation and, thus, spoiling of the airtightness. More preferably, the thickness is from about 2 mm to about 8 mm.

The sealing pad **S1** is secured to the upper and lower surfaces of the frame by way of, for example, a double-sided adhesive tape or an adhesive layer. The adhesive used can include commercially available heat-resistant adhesives such as, for example, chloroprene family synthetic rubber solvent-type adhesives, or the like. The sealing pad **S1** should be secured to the whole periphery of the upper and lower surfaces of the frame, i.e. continuously around the frame. The width of the sealing pad **S1** is set to be within the range in which airtightness is secured. Such a width is usually determined to be about 10 mm to about 30 mm and less than equal to the width of the frame.

In the above mentioned divisional-type spacer **3B,** a sealing pad **S2** is also provided on an inner surface of the outer frame **16a** as shown in Fig. 5 or on an end of the inner frame **16b** as shown in Fig. 6 so as to form an airtight contact between the adjacent outer and inner frames **16a, 16b**.

As mentioned above, the spacer **3** is equipped with sealing pads **S1** on its sheet contacting surfaces so as to be airtight. The two sheets **1, 2** are clamped against the sealing pads **S1, S1** so as to form an airtight closed space **5**. Therefore, the closed space **5** is kept airtight. Thus, when clamping the two sheets **1, 2** between the spacer **3** and the upper and lower clampers **4, 4,** the sheets **1, 2** adhere to the sealing pads **S1, S1** secured to the spacer **3** without forming any openings therebetween. Therefore, when heating both of the sheets **1, 2,** when introducing a compressed air into the closed space **5** in order to expand the sheets **1, 2** in the direction away from each other, or when closing the upper and lower forming dies **8, 9** to the closed position, air in the closed space **5** does not leak outside. As a result, the pressure of the closed space **5** can be maintained such that the sheet **1** has enough restitution force to allow the compressed air introducing air nozzle **10** to penetrate into the sheet **1**.

In the above method according to the invention, there are no problems like that of the first conventional method -- wherein the air nozzle **60** is difficult to insert into the closed space **55**. Further, because the compressed air introducing nozzle **10** can easily be inserted into the closed space **5** formed between the sheets **1, 2,** there is no need to form an air nozzle introducing aperture **H** for an air nozzle as in the second conventional method.

The following is a detailed explanation of the above mentioned divisional-type spacer **3B** shown in Fig. 3.

The spacer **3B** includes a pair of outer frame members **16a, 16a** and a pair of inner frame members **16b, 16b,** which are fabricated into a rectangular frame. As shown in Figs. 4 and 6, outer and inner frame members **16a, 16a, 16b, 16b** are at each of the upper and lower inside surfaces equipped with a sealing pad **S1** along the full length thereof. Further, both edges of the inner frame members **16b, 16b** are equipped with sealing pads **S2** as shown in Fig. 6. Alternatively, as shown in Fig. 5, sealing pads **S2** may be provided on the inner surface of each of the outer frame members **16a, 16a.** The inner surface of the outer frame member **16a** is pressed against the edge of the inner frame member **16b** via the sealing pad **S2**.

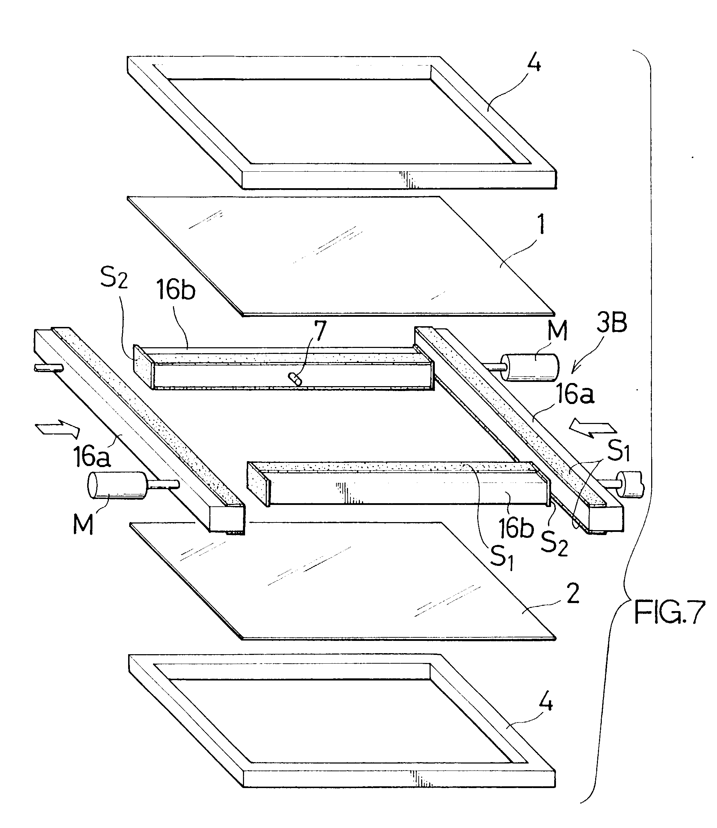

The outer frame members **16a, 16a** are pushed by frame pushing machines **M** connected to the outer frame members **16a, 16a** in the direction of the arrows shown in Fig. 7 and are moved towards the inner frame members **16b, 16b,** which are disposed perpendicular to the outer frame members **16a, 16a** and parallel with each other, so as to form a rectangular, or square, spacer **3B**. The frame pushing machines **M, M** may be driven by oil pressure, by a toggle, by a screw, or the like.

When manufacturing hollow articles, as shown in Fig. 3, a pair of inner frame members **16b, 16b** are disposed horizontally and parallel with each other, and a pair of outer frame members **16a, 16a** are disposed horizontally and parallel with each other and perpendicular to the inner frame members **16b, 16b**. Then, the outer frame members **16a, 16a** are moved towards the edges of the inner frames **16b, 16b** by the frame pushing machines **M** so as to contact the edges of the outer surfaces of the inner frame members **16b, 16b** and the inner surface of the outer frame members **16a, 16a** by way of the sealing pads **S2**. Thus, a rectangular, or square, spacer **3B** is fabricated. In fabricating the spacer **3B**, in order to prevent the sealing pads **S2**, which are disposed between the inner frame members **16b, 16b** and the outer frame members **16a, 16a,** from being abraded or broken, the frame pushing machines **M** should be driven in a manner so as not to cause a sliding contact of the frame members.

Then, a pair of thermoelastic synthetic resin sheets **1, 2** as forming materials are placed on the sealing pads **S1** with the peripheral portion of the sheets **1, 2** being in face-contact with the sealing pads **S1**. Then, the sheets **1, 2** are clamped between the spacer **3B** and the upper and lower clampers **4, 4,** respectively, so as to form a closed space **5** therebetween. As mentioned above, when the spacer **3B** is formed in the shape of a rectangle, or square, by the pair of outer frame members **16a, 16a** and the pair of inner frame members **16b, 16b** with sealing pads **S1, S2** secured at a certain positions and when the two sheets **1, 2** are clamped between the spacer **3** and the upper and lower clampers **4, 4,** air tightness of the closed space **5** formed between two sheets **1, 2** is further improved.

As a result, air leakage from the closed space **5** during the forming process is prevented, thus enabling easy penetration of the compressed air introducing nozzle **10** into the sheet **1** and enhancing the forming performance of hollow articles.

As shown in Figs. 1A to 1C, two thermoelastic synthetic resin sheets **1, 2** are clamped around their periphery between the spacer **3** and the upper and lower clampers **4, 4,** respectively, so as to form a closed space **5** between the sheets **1, 2**. After heating the sheets **1, 2** so as to soften the sheets, both of the sheets **1, 2** are clamped, inside of the spacer **3** and clampers **4, 4,** by the upper and lower forming dies **8, 9**. Then, the compressed air introducing nozzle **10** provided in the upper forming die **8** is moved downward so that the leading end of the nozzle **10** penetrates the upper sheet **1** and is positioned between the upper and lower sheets **1, 2**. Then, compressed air is introduced into the closed space **5** through the nozzle **10** so as to press both of the sheets **1, 2** against the corresponding inner cavity surfaces of the forming dies **8, 9**.

In the manufacture of the device used in the above operation, in order to fabricate the rectangular, or square, spacer **3B**, oil pressure operating type frame pushing machines **M** can be connected to the outer frame members **16a, 16a** for pushing them in the direction of the arrows shown in Fig. 7, perpendicular to the inner frame members **16b, 16b.**

A specific example preferred construction of the invention is now discussed.

Two thermoelastic synthetic resin sheets **1, 2** were prepared as forming sheet materials for forming a hollow article. Each sheet material was a hard polyvinyl chloride sheet of 2.5 mm in thickness, 500 mm in width, and 600 mm in length.

The hollow article to be formed was a thin wall type hollow article having a dimension of 300 mm in width, 400 mm in length, and 30 mm in thickness.

The outer frame members and the inner frame members were prepared by cutting an elongated aluminum piece having a rectangular cross-section, the cross-section having a dimension of 25 mm in height and 100 mm in width. Each of the outer and the inner frame members was provided with a band-like material along the inner side of the upper and lower surfaces as a sealing pad. The sealing pad was made of chloroprene rubber, had a dimension of 3 mm in thickness and 30 mm in width, and was attached via a double-sided adhesive tape (made by Nichiban Corp., Type: No. 800). In addition, sealing pads were adhered on both of the edges of the inner frame members from a band-like material made of chloroprene rubber having a dimension of 5 mm in thickness, 30 mm in height, and 100 mm in width.

The two inner frame members were positioned horizontally and parallel with each other. Then, the outer frame members, which were connected to an oil pressure type frame pushing machine, were pushed against the ends of the inner frame members so as to form a spacer.

The synthetic resin sheets were disposed on the sealing pads with the periphery thereof in contact with the pads. Then, the sheets were clamped between the spacer and the upper and lower clampers so as to form an airtight closed space.

Then, the forming materials were heated to 180°C by heaters. With the materials heated and softened, both sheets were pressed at their peripheral portions, inside of the spacer, by the upper and lower forming dies to integrally join the peripheral portions. An air introducing nozzle provided in the upper molding die was moved downward to penetrate the upper material. Compressed air having a pressure of 3 kg/cm² was introduced into the closed space through the nozzle and maintained therein for a period of two minutes with the inner pressure of the closed space maintained constant.

The above specific example construction was confirmed to allow the insertion of the compressed introducing nozzle into the material without any trouble and without leakage of the compressed air from the closed space.

After cooling, the inner pressure was released to return to a normal pressure. Then, the formed article was removed. Thereafter, the formed article was trimmed. As a result, a hollow article having an accurate surface corresponding to the inner surface of the forming die was obtained.

As mentioned above, according to the invention, even if a hollow article to be formed is a thin hollow article having a short distance between the walls or a thin hollow article having thin walls, an air introducing nozzle provided in the forming die can surely and properly penetrate into the sheet and be inserted into the closed space. Thus, the 'two-sheets-forming method' of the present invention is highly advantageous and can be widely used in a variety of applications.

Although the invention has been described in connection with specific embodiments, the invention is not limited to such embodiments and it is apparent to those skilled in the art that there are various substitutions and modifications within the scope and spirit of the invention.

## Claims

1. A method for producing synthetic resin hollow articles, comprising the steps of:
providing two thermoelastic synthetic resin sheets;
disposing said sheets on upper and lower surfaces of a frame-shaped spacer;
clamping a peripheral portion of each of said sheets by and between said spacer and upper or lower clampers, respectively, in a manner to form an airtight closed space between said sheets;
heating said sheets so as to soften the sheets;
pressing said sheets inside of said spacer by upper and lower forming dies;
penetrating a compressed air introducing nozzle movably provided in one of said forming dies through one of said sheets;
introducing compressed air into said airtight closed space through said nozzle so as to press both of said sheets against corresponding inner cavity surfaces of said forming dies;
cooling said sheets while maintaining an inner pressure in said closed space.

2. A method for producing synthetic resin hollow articles as recited in claim 1, further including the step of disposing sealing pads on the whole periphery of sheet contacting surfaces of said frame-shaped spacer so as to form an airtight contact.

3. A method for producing synthetic resin hollow articles as recited in claim 2, further including the step of providing sealing pads of heat-resistant rubber elastic material.

4. A method for producing synthetic resin hollow articles as recited in claim 3, wherein said material is provided from the group selected from chloroprene rubber, polyurethane rubber, silicone rubber and nitrile rubber.

5. A method for producing synthetic resin hollow articles as recited in claim 2, wherein said sealing pad is provided to be about 1 mm to about 10 mm thick.

6. A method for producing synthetic resin hollow articles as recited in claim 2, wherein said sealing pad is provided to be about 10 mm to about 30 mm wide narrower than the width of said spacer.

7. A method for producing synthetic resin hollow articles as recited in claim 1, further including the steps of providing said spacer from a pair of inner frame members disposed parallel with each other and a pair of outer frame members disposed parallel with each other and perpendicular to said inner frame members, disposing sealing pads on outer and inner frame members on both said upper and lower surfaces along the full lengths thereof, and disposing sealing pads on both edges of said inner frame members.

8. A method for producing synthetic resin hollow articles as recited in claim 1, further including the steps of providing said spacer from a pair of inner frame members disposed parallel with each other and a pair of outer frame members disposed parallel with each other and perpendicular to said inner frame members, disposing sealing pads on both of the outer and inner frame members at each of said upper and lower surfaces along the full lengths thereof, and disposing sealing pads on an inner surface of each of said outer frame member.

9. A method for producing synthetic resin hollow articles as recited in claim 1, further including, after heating said sheets, the step of introducing compressed air into said airtight closed space through an air nozzle provided in said spacer so as to expand said sheets in the direction away from each other.

10. An apparatus for producing synthetic resin hollow articles comprising:
a frame-shaped spacer;
a pair of upper and lower clampers for clamping upper and lower thermoelastic synthetic resin sheets to be formed between said spacer and each of said clampers, respectively;
at least one heater for heating said sheets so as to soften the sheets;
a pair of forming dies each having a peripheral edge for pressing peripheral portions of said sheets inside of the clamped portion; and
a compressed air introducing nozzle movably provided in one of said dies to penetrate one of said sheets so as to introduce compressed air therebetween;
wherein said spacer is equipped with sealing pads on the whole periphery of sheet contacting surfaces of said spacer so as to be airtight.

11. An apparatus for producing synthetic resin hollow articles as recited in claim 10, wherein said sealing pad is made of heat-resistant rubber elastic material.

12. An apparatus for producing synthetic resin hollow articles as recited in claim 11, wherein said material is one of the group selected from chloroprene rubber, polyurethane rubber, silicone rubber and nitrile rubber.

13. An apparatus for producing synthetic resin hollow articles as recited in claim 10, wherein said sealing pad is from about 1 mm to about 10 mm thick.

14. An apparatus for producing synthetic resin hollow articles as recited in claim 10, wherein said sealing pad is from about 10 mm to 30 mm wide and narrower than the width of said spacer.

15. An apparatus for producing synthetic resin hollow articles as recited in claim 10, wherein said spacer includes a pair of inner frame members disposed parallel with each other and a pair of outer frame members disposed parallel with each other and perpendicular to said inner frame members, said inner and outer frame members being fabricated into a rectangular frame, wherein outer and inner frame members are at each of said upper and lower surfaces equipped with a sealing pad along the full length thereof, and both edges of said inner frame members are equipped with sealing pads.

16. An apparatus for producing synthetic resin hollow articles as recited in claim 15, further including a frame pushing machine connected to said outer frame member for pushing said outer frame member toward said inner frame member.

17. An apparatus for producing synthetic resin hollow articles as recited in claim 10, wherein said spacer includes a pair of inner frame members disposed parallel with each other and a pair of outer frame members disposed parallel with each other and perpendicular to said inner frame members, said inner and outer frame members being fabricated into a rectangular frame, wherein outer and inner frame members are at each of said upper and lower surfaces equipped with a sealing pad along the full length thereof, and an inner surface of each of said outer frame member is equipped with sealing pad.

18. An apparatus for producing synthetic resin hollow articles as recited in claim 17, further including a frame pushing machine connected to said outer frame member for pushing said outer frame member toward said inner frame member.

19. An apparatus for producing synthetic resin hollow articles as recited in claim 10, further including an air nozzle provided in said spacer for introducing compressed air into said airtight closed space so as to expand said sheets in the direction away from each other.
